# EUROPÄISCHE PATENTSCHRIFT

(11) **EP 2 780 886 B1**
(45) Veröffentlichungstag und Bekanntmachung des Hinweises auf die Patenterteilung: **28.08.2019**
(21) Anmeldenummer: 12791095.8
(22) Anmeldetag: 06.11.2012
(51) Int. Cl.: G06T 1/20

(54) **GRAFIKVERARBEITUNGSVORRICHTUNG, ANZEIGEVORRICHTUNG FÜR EIN FLUGZEUGCOCKPIT SOWIE VERFAHREN ZUR ANZEIGE VON GRAFIKDATEN**
GRAPHICS PROCESSING DEVICE, DISPLAY UNIT FOR AN AIRPLANE COCKPIT, AND METHOD FOR DISPLAYING GRAPHICAL DATA
DISPOSITIF DE TRAITEMENT GRAPHIQUE, DISPOSITIF D'AFFICHAGE POUR UN COCKPIT D'AVION, AINSI QUE PROCÉDÉ D'AFFICHAGE DE DONNÉES GRAPHIQUES

(30) Priorität: 19.11.2011 DE 102011119004
(43) Veröffentlichungstag der Anmeldung: 24.09.2014
(73) Patentinhaber: Diehl Aerospace GmbH, 88662 Überlingen (DE)
(72) Erfinder: RETTIG, Sven, 63329 Egelsbach (DE); HOSEMANN, Thomas, 07429 Sitzendorf (DE)
(74) Vertreter: Diehl Patentabteilung
(86) Internationale Anmeldenummer: PCT/EP2012/004620
(87) Internationale Veröffentlichungsnummer: WO 2013/072027

(56) Entgegenhaltungen:
- EP-A2- 1 326 165
- EP-A2- 1 450 258
- US-A1- 2003 164 823
- US-A1- 2007 103 476
- US-B1- 6 674 841

## Beschreibung

Die Erfindung betrifft eine Grafikverarbeitungsvorrichtung mit den Merkmalen des Oberbegriffs des Anspruchs 1. Die Erfindung betrifft auch eine Anzeigevorrichtung für ein Flugzeugcockpit mit dieser Grafikverarbeitungsvorrichtung sowie ein Verfahren mit dieser Grafikverarbeitungsvorrichtung.

Grafikkarten steuern üblicherweise die Bildanzeige von Datenverarbeitungsanlagen. Dabei erzeugt eine Anwendung auf der Datenverarbeitungseinrichtung Daten zu einer grafischen Ausgabe und leitet diese an die Grafikkarte weiter. Die Grafikkarte wandelt die Daten so um, dass eine Anzeigeeinrichtung die gewünschte Ausgabe als Bild wiedergeben kann. Derartige Grafikkarten sind in jedem handelsüblichen PC entweder als Erweiterungskarte oder als Onboard-Chipsatz enthalten.

Es ist ebenfalls von handelsüblichen PCs bekannt, dass eine Grafikkarte zwei unterschiedliche Anzeigeeinrichtungen, zum Beispiel zwei Bildschirme, ansteuern kann. In diesen Ausführungen ist es möglich, dass auf dem ersten Bildschirm die grafischen Ausgabe einer ersten Anwendung und auf dem zweiten Bildschirm die grafische Ausgabe einer zweiten Anwendung dargestellt werden.

Die Druckschrift US 2007/103476 A1, die wohl den nächstkommenden Stand der Technik bildet, betrifft eine GPU, die ein Context Switching umsetzt, wobei das Context Switching über einen Interrupt getriggert wird.

Der Erfindung liegt die Aufgabe zugrunde, eine Grafikverarbeitungsvorrichtung vorzuschlagen, die erhöhten Sicherheitsanforderungen entspricht. Es ist eine weitere Aufgabe der Erfindung, eine Anzeigevorrichtung für ein Flugzeugcockpit sowie ein Verfahren jeweils mit dieser Grafikverarbeitungsvorrichtung vorzuschlagen.

Diese Aufgaben werden durch eine Grafikverarbeitungsvorrichtung mit den Merkmalen des Anspruchs 1, durch eine Anzeigevorrichtung für ein Flugzeugcockpit mit den Merkmalen des Anspruchs 8 sowie durch ein Verfahren mit den Merkmalen des Anspruchs 10 gelöst. Bevorzugte oder vorteilhafte Ausführungsformen der Erfindungen ergeben sich aus den Unteransprüchen, der nachfolgenden Beschreibung sowie den beigefügten Figuren.

Der Gegenstand der Erfindung ist eine Grafikverarbeitungsvorrichtung, insbesondere ausgebildet als Grafikprozessor, welche geeignet und/oder ausgebildet ist, Grafikdaten von Grafikobjekten in Pixel der Grafikobjekte umzuwandeln.

Die Grafikobjekte können im Allgemeinen als ein Vollbild oder als ein Teilbild ausgebildet sein. Bei bevorzugten Ausführungsformen sind die Grafikobjekte als eine oder mehrere Grafikprimitiven realisiert. Beispielsweise werden bei der OpenGL-Spezifikation komplexe grafische Objekte durch eine oder mehrere Grafikprimitiven dargestellt. Eine Grafikprimitive kann z.B. ein Dreieck oder eine Linie sein.

Die Grafikverarbeitungsvorrichtung ist besonders bevorzugt als ein integrierter Schaltkreis und insbesondere als ein FPGA (Feld programmierbare Logik-Gatter-Anordnung oder Field Programmable Gate Array) realisiert.

Die Grafikverarbeitungsvorrichtung umfasst eine Kontrolleinrichtung, welche zur Übernahme von Grafikdaten zu ersten Grafikobjekten aus einer ersten Anwendung und zur Übernahme von Grafikdaten zu zweiten Grafikobjekten aus einer zweiten Anwendung ausgebildet ist. Die Grafikdaten sind insbesondere als ein Befehlssatz zur Erzeugung von mindestens einer Grafikprimitiven ausgebildet.

Die Kontrolleinrichtung kann beispielsweise mit einem Bus, insbesondere einem PCI-Bus, zur Übernahme der Grafikdaten signaltechnisch verbunden und/oder eine Schnittstelle zur signaltechnischen Verbindung mit diesem Bus aufweisen.

Die Grafikverarbeitungsvorrichtung umfasst ferner ein Geometriemodul zur Erzeugung der Geometriedaten der Grafikobjekte aus den Grafikdaten. Das Geometriemodul kann wiederum mehrere Untermodule aufweisen, die eine, einige oder alle der nachfolgenden Aufgaben umsetzen, die nur als Hinweise ausgestaltet sind, da diese Untermodule bekannt sind:
Untermodul zur Modell- und Kameratransformation:
   In diesem Untermodul erfolgt eine Transformation der Grafikobjekte in ein Referenzkoordinatensystem, insbesondere Weltkoordinatensystem sowie optional ergänzend eine Transformation der Kamera in den Nullpunkt des Referenzkoordinatensystems.
Untermodul zur Beleuchtung:
   In diesem Untermodul wird für jedes Grafikobjekt, insbesondere für jede Grafikprimitive eine Farbe und/oder Helligkeit berechnet.
Untermodul zur Projektion:
   In diesem Untermodul erfolgt die Transformation des Sichtvolumens in einen Würfel.
Clipping:
   In diesem Untermodul werden Grafikobjekte abgeschnitten, die sich außerhalb des Sichtvolumens befinden.
Window-Viewport-Transformation:
   In diesem Untermodul erfolgt eine Verschiebung sowie Skalierung der Grafikobjekte.

Als Verarbeitungsergebnis gibt das Geometriemodul Geometriedaten der Grafikobjekte aus. Diese Geometriedaten werden von einem Rastermodul, welches eine weitere Komponente der Grafikverarbeitungsvorrichtung bildet, aufgenommen und zur Rasterung der Grafikobjekte ausgewertet. Insbesondere werden in dem Rastermodul alle Grafikobjekte, insbesondere alle Primitiven, gerastert, also die zu ihnen gehörenden Pixel eingefärbt. Das Rastermodul erzeugt somit Pixel der Grafikobjekte.

Die Kontrolleinrichtung, das Geometriemodul und das Rastermodul bilden zusammen eine Grafikpipeline, welche ausgebildet ist, in einem seriellen Durchgang eines der Grafikobjekte abzuarbeiten, indem aus den Grafikdaten von der Anwendung zu dem Grafikobjekt Pixel des Grafikobjekts erzeugt und ausgegeben werden. Das Geometriemodul und das Rastermodul werden nachfolgend zusammenfassend auch als die Module bezeichnet.

Insbesondere ist die Grafikverarbeitungsvorrichtung als eine GPU (Graphics Processing Unit), im speziellen als eine FPGA-GPU ausgebildet, welche eine Mehrzahl, insbesondere mehr als 50, vorzugsweise mehr als 100 derartiger Grafikpipelines aufweist.

Im Rahmen der Erfindung wird vorgeschlagen, dass die Grafikpipeline ausgebildet ist, die Bearbeitung eines der ersten Grafikobjekte in einem ersten seriellen Durchlauf zu unterbrechen, sodass ein teilbearbeitetes Grafikobjekt vorliegt, mindestens eines der zweiten Grafikobjekte in einem zweiten seriellen Durchlauf zu bearbeiten und nachfolgend die Bearbeitung des teilbearbeiteten Grafikobjekts in der gleichen Grafikpipeline weiterzuführen.

Insbesondere ist die Grafikpipeline so ausgebildet, dass ein zeitliches Multiplexen in Bezug auf die Grafikobjekte der ersten und der zweiten Anwendung erfolgt. Dabei werden nacheinander Grafikobjekte der ersten und der zweiten Anwendung bearbeitet, wobei jedoch die Bearbeitung des Grafikobjekts der ersten Anwendungen nicht vollständig erfolgen muss, vielmehr kann die Bearbeitung des Grafikobjekts der ersten Anwendung unterbrochen werden und die Bearbeitung eines Grafikobjekts der anderen Anwendung zwischengeschoben werden, bevor die Bearbeitung des Grafikobjekts der ersten Anwendung beendet wird.

Erfindungsgemäß erfolgt die Unterbrechung für jedes Grafikobjekt der ersten Anwendung.

Durch die Ausbildung der Erfindung wird erreicht, dass innerhalb der Grafikverarbeitungsvorrichtung, insbesondere der Grafikpipeline, eine Trennung, insbesondere eine zeitliche Trennung, zwischen verschiedenen Anwendungen hergestellt wird. Im Englischen wird diese Trennung auch als temporal segregation bezeichnet.

Eine derartige Trennung ist für die Zulassung von Grafikverarbeitungsvorrichtungen nach hohem Sicherheitslevel, zum Beispiel nach der DO-178 B oder der ED-12 B notwendig. Beispielsweise können die zwei Anwendungen unterschiedlichen Sicherheitsstufen, zum Beispiel DAL A und DAL B zugeordnet sein und trotzdem auf die gleiche Datenverarbeitungsvorrichtung, insbesondere Grafikpipeline zugreifen. Der Vorteil der Erfindung ist somit darin zu sehen, dass durch die zeitliche Trennung der beiden Anwendungen in der Grafikverarbeitungsvorrichtung eine höhere Sicherheit erreicht wird. Dagegen enthalten kommerzielle Grafikprozessoren keine derartigen Sicherheitsmechanismen, insbesondere, da diese im normalen Umfeld (Einbau in PC, Notebook usw.) nicht notwendig sind.

Erfindungsgemäß gibt die Grafikpipeline eine Serie von aufeinanderfolgenden, jeweils gleichlangen Zeitscheiben vor. Beispielsweise können die aufeinanderfolgenden Zeitscheiben so gewählt sein, dass 30 Zeitscheiben pro Sekunde vorgesehen sind, die Grafikpipeline somit einen Takt von 30 Hz aufweist.

Es ist bevorzugt vorgesehen, dass innerhalb einer gemeinsamen Zeitscheibe die Teilbearbeitung eines der ersten Grafikobjekte und die Bearbeitung mindestens eines der zweiten Grafikobjekte erfolgt. Diese Aufteilung der Grafikobjekte auf verschiedene, jedoch gemeinsame Zeitscheiben hat den Vorteil, dass zum Beispiel von einer ersten Anwendung mit einer höheren Aktualisierungsrate wie zum Beispiel 30 Hz in jeder Zeitscheibe ein Grafikobjekt bearbeitet wird, sodass die Grafikobjekte diese Anwendung verzögerungsfrei bearbeitet werden. Bei einer anderen Anwendung ist die Aktualisierungsrate beispielsweise geringer, zum Beispiel 15 Hz, wobei pro Zeitscheibe der Grafikpipeline ein Grafikobjekt zur Hälfte oder zu einem vorteilhaften Anteil bearbeitet wird und der verbleibende Rest des Grafikobjekts in einer nachfolgenden Zeitscheibe als teilbearbeitetes Grafikobjekt weiterbearbeitet wird.

Obwohl in der Beschreibung nur Bezug auf zwei Anwendungen genommen wird, ist es möglich, dass auch mehr Anwendungen auf die Grafikverarbeitungsvorrichtung, insbesondere die Grafikpipeline, zugreifen und sich die Ressource teilen. Es ist prinzipiell auch denkbar, dass zwei Anwendungen mit einer Aktualisierungsrate von 15 Hz zugreifen, wobei in jeder Zeitscheibe der Grafikpipeline ein Grafikobjekt jeder Anwendung teilweise bearbeitet wird. Weiterhin ist es denkbar, dass eine Anwendung eine noch geringere Aktualisierungsrate aufweist, zum Beispiel 10 Hz, sodass die Bearbeitung des Grafikobjekts auf mehr als zwei Zeitscheiben, hier drei Zeitscheiben verteilt wird.

Allgemein beschrieben ermöglicht es die Grafikverarbeitungsvorrichtung, Grafikobjekte verschiedener Anwendungen derart auf die Zeitscheiben zu verteilen, sodass die Bearbeitung mindestens eines Grafikobjekts über mindestens zwei oder mehrere Zeitscheiben erfolgt.

Bei einer bevorzugten Ausführungsform der Erfindung definieren die aufeinanderfolgenden Zeitscheiben einen Synchrontakt für die Bearbeitung der Grafikobjekte. Die Bearbeitung der Grafikobjekte der ersten Anwendung erfolgt dagegen asynchron zu diesem Synchrontakt. Dabei kann vorgesehen sein, dass die Unterbrechung der Bearbeitung der ersten Grafikobjekte nach einem starren Muster erfolgt, so dass z.B. die Bearbeitung eines der ersten Grafikobjekte stets auf zwei Zeitscheiben verteilt wird. Alternativ kann die Unterbrechung der Bearbeitung der ersten Grafikobjekte auch dynamisch, insbesondere in Abhängigkeit der verfügbaren Arbeitszeit innerhalb einer Zeitscheibe erfolgen. Besonders bevorzugt erfolgt die Unterbrechung stets zu dem gleichen Zeitpunkt innerhalb eines Zeitfensters.

Erfindungsgemäß weist die Grafikverarbeitungsvorrichtung eine Zeitplanungseinrichtung auf, die ausgebildet ist, ein Speichersignal zur Unterbrechung der Bearbeitung des ersten Grafikobjekts an die Grafikpipeline auszugeben.

Bevorzugt ist, dass die Module, insbesondere das Geometriemodul und das Rastermodul, bei Anliegen des Speichersignals ihre internen Kalkulationen beendet, also eine Primitivenrenderung oder dergleichen, aber keinen weiteren Befehl zu dem aktuellen Grafikobjekt mehr annimmt. Somit wird sichergestellt, dass die Unterbrechung der Bearbeitung des ersten Grafikobjekts nicht unkontrolliert, sondern zu einem Zeitpunkt erfolgt, an den zu einem weiteren Zeitpunkt, insbesondere während einer weiteren Zeitscheibe angeknüpft werden kann.

Als weitere Reaktion auf das Speichersignal ist die Grafikpipeline ausgebildet, Kontextdaten von dem teilbearbeiteten Grafikobjekt auszugeben. Die Kontextdaten umfassen insbesondere die Registerdaten der Module sowie die Daten aus den benachbarten Eingangs- und Ausgangsspeichern, insbesondere Fifo-Speichern. Diese Kontextdaten werden optional zwischengespeichert und für den späteren seriellen Durchlauf durch die Grafikpipeline zur Verfügung gestellt, um die Bearbeitung weiterzuführen. Zu dem Zeitpunkt, an dem das Speichersignal anliegt, werden somit alle für das aktuelle, teilbearbeitete Grafikobjekt zur Weiterbearbeitung notwendigen Daten als Kontextdaten zusammengefasst und optional zwischengespeichert.

Nachdem die Kontextdaten des aktuellen teilbearbeiteten Grafikobjekts aus der Grafikpipeline ausgelesen sind, kann die Grafikpipeline für die Bearbeitung eines der zweiten Grafikobjekte bereitgestellt und verwendet werden.

Bei einer bevorzugten Weiterbildung der Erfindung werden die Kontextdaten an dem Ende der Grafikpipeline, insbesondere über das Rastermodul, an die Zeitplanungseinrichtung ausgegeben. Die Kontextdaten werden somit seriell für die unterschiedlichen Module und gegebenenfalls zwischengeschalteten Speichereinrichtungen, insbesondere Fifo-Einrichtungen, ausgelesen. Diese Realisierung vereinfacht zum einen den signaltechnischen Aufbau der Grafikverarbeitungsvorrichtung, da nicht jedes Modul und jede Speichereinrichtung einen eigenen Datenausgang zur Ausgabe der Kontextdaten aufweisen muss. Zum zweiten können die Kontextdaten geordnet, das heißt, in einer determinierten Reihenfolge ausgelesen werden und - wie später noch erläutert wird - zur Weiterbearbeitung wieder geordnet in die Grafikpipeline eingegeben werden.

Bei einer bevorzugten Ausbildung der Erfindung ist die Zeitplanungseinrichtung ausgebildet, die Kontextdaten in einem Speicher abzulegen. Dadurch, dass die Kontextdaten in einem Speicher abgelegt werden, kann die Zeitplanungseinrichtung nun Grafikdaten eines anderen Grafikobjekts in die Grafikpipeline einleiten, ohne von den Kontextdaten behindert zu sein.

Bei einer bevorzugten Weiterbildung der Erfindung ist die Zeitplanungseinrichtung ausgebildet, ein Wiederherstellungssignal zur Weiterführung der Bearbeitung des teilbearbeiteten Grafikobjekts an die Grafikpipeline auszugeben. Zu diesem Zeitpunkt liest die Zeitplanungseinrichtung die Kontextdaten gegebenenfalls aus dem Speicher aus und sendet diese wieder in die Grafikpipeline zur weiteren Bearbeitung.

Bei einer bevorzugten Realisierung der Erfindung bildet die Zeitplanungseinrichtung mit der Grafikpipeline eine Ringstruktur, sodass bei einem Speichersignal die Kontextdaten an dem Ende der Grafikpipeline ausgelesen und dass bei einem Wiederherstellungssignal die Kontextdaten in die Grafikpipeline eingespielt werden. Optional ergänzend ist an der Ringstruktur der Speicher zur temporären Speicherung der Kontextdaten angeschlossen und/oder ein Eingang zur Übernahme von Grafikdaten zu den Grafikobjekten von den Anwendungen vorgesehen.

Erfindungsgemäß sind zwischen den Modulen oder den Untermodulen, wie sie zuvor beschrieben wurden, Speichereinrichtungen zwischengeschaltet, welche insbesondere als Fifo-Speicher (first in first out) ausgebildet sind. Die Kontextdaten weisen Registerdaten der Module und Fifo-Daten von den Speichereinrichtungen auf.

Erfindungsgemäß haben die Registerdaten einen Signalflag, insbesondere ein Signalbit, der bei einem normalen Betrieb der Grafikpipeline auf einen ersten Wert, nachfolgend beispielhaft 0, gesetzt ist und bei einem Speichervorgang auf einen anderen Wert, nachfolgend eispielhaft 1, gesetzt ist. Mit dem Signalflag werden somit die als Kontextdaten zu speichernden Registerdaten gekennzeichnet. Der Signalflag hat den Vorteil, dass Registerdaten, die einen Signalflag mit dem Wert 1 aufweisen, seriell durch die Grafikpipeline durchgeschoben und nicht bearbeitet werden.

Optional weisen auch die Fifo-Daten den Signalflag auf, wobei dieser jedoch stets auf den ersten Wert, also 0, gesetzt ist. Dadurch ist es möglich, nach einem Speichersignal Fifo-Daten von Registerdaten zu unterscheiden.

Nachdem - wie bereits erläutert - die Registerdaten und die Fifo-Daten seriell ausgelesen werden und zudem der Signalflag bei einem Auslesevorgang bei den Fifo-Daten auf den Wert 0 und bei den Registerdaten auf den Wert 1 gesetzt ist, kann der Signalflag zur Auswertung von Positionen von Daten herangezogen werden.

Betrachtet man einen Datenfluss der Kontextdaten, so kommt z. B. zunächst ein erster Registerdatenblock, dann ein erster Fifo-Datenblock, dann ein zweiter Registerdatenblock, dann ein zweiter Fifo-Datenblock etc. Diese Reihenfolge lässt sich aufgrund der Reihenfolge und des Signalflags eindeutig zu den Modulen und den Speichereinrichtungen zuordnen, sodass das spätere Wiedereinspielen der Kontextdaten in die Grafikpipeline verwechslungsfrei erfolgen kann.

Bei einer bevorzugten Weiterbildung der Erfindung weist die Grafikverarbeitungsvorrichtung einen Pixelspeicher auf, der zur Speicherung der Pixel aus dem Rastermodul ausgebildet ist. Es ist besonders bevorzugt, dass die Zeitplanungseinrichtung ausgebildet ist, den Pixeln von unterschiedlichen Anwendungen in dem Pixelspeicher unterschiedliche Speicherbereiche zuzuweisen. Vorzugsweise kann die Zuweisung der Speicherbereiche vom User oder von der Anwendung nicht beeinflusst werden, sodass hierdurch eine sichere örtliche Trennung (spatial Segregation) der Anwendungen gegeben ist. Diese Weiterbildung erhöht weiter den Sicherheitsstandard der Grafikverarbeitungsvorrichtung.

Ein weiterer Gegenstand der Erfindung betrifft eine Anzeigevorrichtung für ein Flugzeugcockpit mit der Grafikverarbeitungsvorrichtung, wie sie zuvor beschrieben wurde, beziehungsweise nach einem der vorhergehenden Ansprüche, wobei die Anzeigevorrichtung mindestens einen ersten und einen zweiten Anzeigebereich aufweist, wobei auf dem ersten Anzeigebereich Grafikobjekte der ersten Anwendung und auf dem zweiten Anzeigebereich Grafikobjekte der zweiten Anwendung darstellbar sind. Bei den Anzeigebereichen kann es sich um zwei Anzeigebereiche eines gemeinsamen Bildschirms handeln oder um Anzeigebereiche von zwei unterschiedlichen Bildschirmen.

In einer konkreten Ausgestaltung der Erfindung dient der erste Anzeigebereich zur Darstellung eines Primär-Flugdisplays (PFD) und der zweite Anzeigebereich zur Darstellung eines Navigationsdisplays (ND). Diese zwei Anwendungen sind in dem Flugzeugcockpit beide sicherheitsrelevant, sodass die Softwareumsetzung einen hohen Sicherheitsstandard erfordert, wie dieser durch die Grafikverarbeitungsvorrichtung, wie sie zuvor beschrieben wurde, erreicht wird.

Besonders bevorzugt weisen die erste und die zweite Anwendung unterschiedliche Aktualisierungsraten auf.

Ein weiterer Gegenstand der Erfindung betrifft ein Verfahren mit den Merkmalen des Anspruchs 10.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: ein schematisches Blockdiagramm einer Grafikverarbeitungsvorrichtung als ein Ausführungsbeispiel der Erfindung;
- Figur 2: eine Zeitlinie, in der schematisch die Bearbeitung von Grafikobjekten in der Grafikverarbeitungsvorrichtung der Figur 1 dargestellt ist;
- Figur 3: eine Zeitlinie, in der schematisch die Struktur der Kontextdaten aus der Grafikverarbeitungsvorrichtung in der Figur 1 dargestellt ist;
- Fig. 4a,b,c,d: die Grafikverarbeitungsvorrichtung der vorhergehenden Figuren in verschiedenen Betriebszuständen zur Erläuterung ihrer Funktionsweise;
- Figur 5: eine schematische Darstellung einer Anzeigevorrichtung für ein Flugzeugcockpit mit der Grafikverarbeitungsvorrichtung der vorhergehenden Figuren;
- Figur 6a,b: eine schematische Darstellung der zeitlichen Abfolge bei einer Unterbrechung und einer Wiederaufnahme der Bearbeitung eines Grafikobjekts.

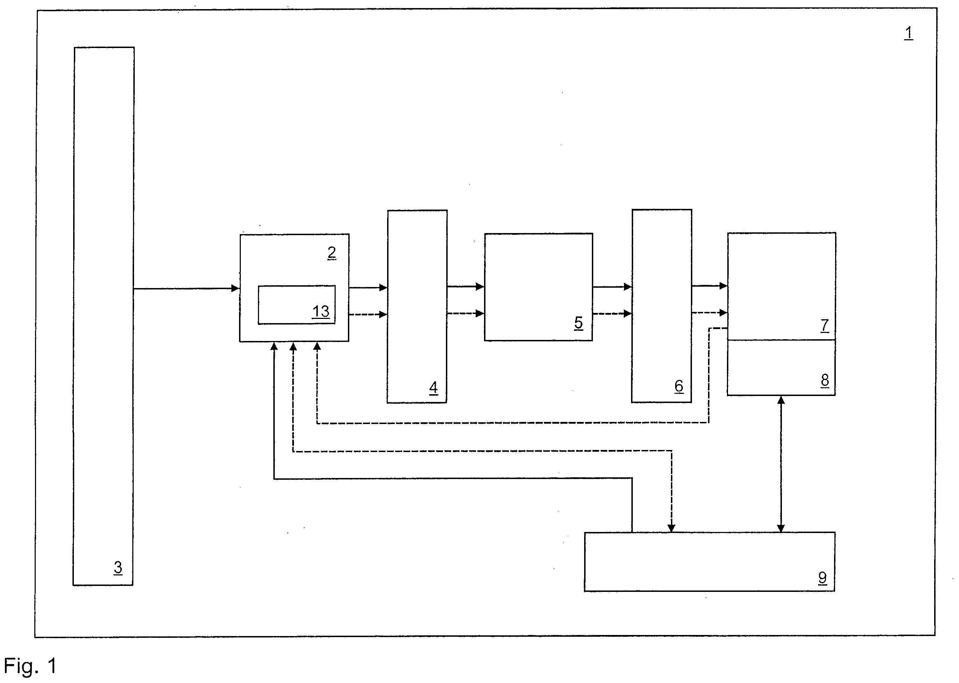

Die Figur 1 zeigt in einer schematischen Blockdarstellung eine Grafikverarbeitungsvorrichtung 1 als ein Ausführungsbeispiel der Erfindung, welche es ermöglicht, Grafikbefehle aus Anwendungen in Pixel umzusetzen, die auf Anzeigeeinrichtungen als graphische Ausgabe der Anwendungen dargestellt werden können. Die Grafikverarbeitungsvorrichtung 1 ist als Hardware realisiert und als ein FPGA ausgebildet.

Die Grafikverarbeitungsvorrichtung 1 umfasst eine Kontrolleinrichtung 2, die über eine Schnittstelle 3 mit einem Datenbus, wie z.B. einem PCI-Bus, verbunden ist. Über die Schnittstelle 3 werden von Anwendungen Grafikdaten, insbesondere Grafikbefehle an die Kontrolleinrichtung 2 zur Generierung der Pixel für die Anwendung übergeben.

Ausgehend von der Kontrolleinrichtung 2 werden die Grafikdaten an eine erste Speichereinrichtung 4 mit einer Fifo-Architektur übergeben, die als Eingangspuffer die Grafikdaten für eine Bearbeitung in dem nachfolgenden Geometriemodul 5 bereitstellt. In dem Geometriemodul 5 werden die Grafikdaten, insbesondere die Grafikbefehle, teilweise umgesetzt und Grafikprimitive, also z.B. Dreiecke oder Linien, gegebenenfalls mit Farbdefinitionen, gebildet. Die bearbeiteten Grafikdaten bzw. die Grafikprimitiven werden in eine weitere Speichereinrichtung 6, die ebenfalls als Fifo-Speicher ausgebildet ist, übergeben und dann in ein Rastermodul 7 eingelesen. In dem Rastermodul 7 werden aus den Geometrieprimitiven zusammen mit den Farbdefinitionen Pixel erzeugt, die nachfolgend in einem Pixelspeicher 8 und von diesem über eine Datenschnittstelle 9 ausgegeben werden.

Die Kontrolleinrichtung 2, das Geometriemodul 5 und das Rastermodul 7 zusammen mit den Speichereinrichtungen 4 und 6 bilden eine so genannte Grafikpipeline, da die Grafikdaten innerhalb der Grafikpipeline seriell abgearbeitet werden. Während in dem gezeigten Blockschaltbild in der Figur 1 das Geometriemodul 5 und das Rastermodul 7 nur als ein einziger Block dargestellt sind, kann bei einer hardwaretechnischen Realisierung das Geometriemodul 5 auch in mehrere, insbesondere fünf Untermodule aufgeteilt sein, wobei zwischen den Untermodulen jeweils Speichereinrichtungen in Fifo-Architektur angeordnet sind. In gleicher Weise kann auch das Rastermodul 7 in mehrere Untermodule unterteilt sein, die unter Zwischenschaltung von Speichereinrichtungen, ausgebildet als Fifo-Speicher, signaltechnisch miteinander verbunden sind.

In der Grafikverarbeitungsvorrichtung 1 können mehrere derartige Grafikpipelines parallel zueinander angeordnet sein, um gemeinsam die Pixel für die graphische Anzeige der Anwendung zu erzeugen. Die Grafikverarbeitungsvorrichtung 1 bzw. die Grafikpipeline arbeitet in einem Synchrontakt, z.B. von 30 Hertz, so dass bei Ausnutzung des Synchrontakts die Anwendung ein anzeigbares Bild auf der Anzeigeeinrichtung mit einer Aktualisierungsrate gleich dem Synchrontakt ausgeben kann.

Die Grafikerzeugung für eine einzige Anwendung ist durch die bereits beschriebenen Komponenten der Grafikverarbeitungsvorrichtung 1 bereits möglich. Die Datenverarbeitungsvorrichtung 1 ist jedoch ergänzend in der Lage, mehrere Anwendungen, insbesondere mindestens zwei Anwendungen, quasi-parallel zu bearbeiten, wobei datentechnisch betrachtet eine zeitliche als auch örtliche Trennung zwischen den Anwendungen hergestellt wird (temporal and spatial segregation). Eine derartige Trennung ist für die Zulassung von Soft- und Hardware nach hohem Sicherheitslevel, z.B. DAL A/B, notwendig.

Das zugrunde liegende Prinzip beruht darauf, dass zu einem wählbaren Zeitpunkt Daten und Parameter innerhalb der Grafikpipeline als Kontextdaten gespeichert werden können und später wieder verwendet werden können, so dass eine Anwendung in der Grafikpipeline kurzzeitig ausgesetzt werden kann.

Der Vorteil der Grafikverarbeitungsvorrichtung 1 liegt in einer höheren Performance und in der Möglichkeit, verschiedene Applikationen auf der gleichen Datenverarbeitungsvorrichtung 1 zu mischen. So wird es z.B. möglich, eine DAL C-Funktion, die lediglich einzweimal pro Sekunde aufgerufen wird, mit einer DAL A-Funktion, die 30 mal pro Sekunde aufgerufen wird, zu mischen. Dabei kann das Bild der DAL C-Funktion in einem Zyklus des Synchrontakts teilweise generiert werden und die Generierung später fortgesetzt werden.

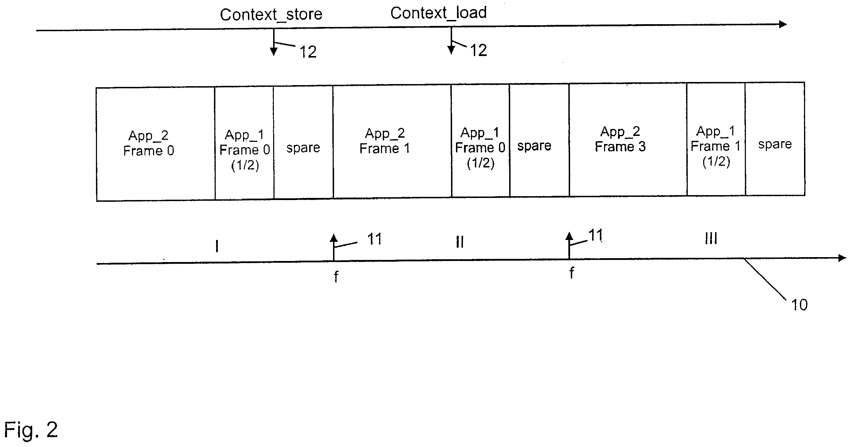

Diese prinzipielle Funktionsweise ist in der Figur 2 schematisiert dargestellt, die eine Zeitlinie für die Datenverarbeitungsvorrichtung 1 zeigt.

Der waagrecht verlaufende, untere Pfeil 10 zeigt den Synchrontakt mit der Frequenz f, wobei die einzelnen Taktabschnitte durch Pfeile 11 unterbrochen sind.

In dem ersten Synchrontakt I wird von der Datenverarbeitungsvorrichtung 1 ein Bild 0 (Frame 0) einer zweiten Anwendung App_2 vollständig bearbeitet. Nachfolgend wird das Bild 0 (Frame 0) einer ersten Anwendung App_1 beispielsweise zur Hälfte bearbeitet, so dass die Bearbeitung dieses Bildes 0 unterbrochen wird. Der verbleibende Bereich (spare) in dem Synchrontakt I ist ein Sicherheitszeitpuffer.

In dem Synchrontakt II wird von der zweiten Applikation App_2 ein Bild 1 (Frame 1) vollständig bearbeitet. Von der ersten Anwendung App_1 wird dagegen das Bild 0 (Frame 0) fertig bearbeitet, so dass dies nach dem zweiten Synchrontakt II zur Verfügung steht.

In dem dritten Synchrontakt III wird ein Bild 2 (Frame 3) der zweiten Anwendung App_2 bearbeitet und ein Bild 1 (Frame 1) der ersten Anwendung App_1 zumindest wieder teilweise bearbeitet.

Mit dieser zeitlichen Aufteilung ist die Grafikerzeugung innerhalb der Grafikverarbeitungsvorrichtung 1 bzw. innerhalb der Grafikpipeline der zwei Anwendungen App_1 und App_2 zeitlich voneinander getrennt.

Für die Anwendung App_2 wird in jedem Synchrontakt I, II, III ein vollständiges Bild erzeugt, so dass die zweite Anwendung App_2 eine Aktualisierungsrate entsprechend dem Synchrontakt, also von z.B. 30 Herzt aufweist. Dagegen werden von der ersten Anwendung App_1 in jedem Synchrontakt I, II, III nur ein halbes Bild oder ein Teilbild bearbeitet, die Bearbeitung unterbrochen und in dem nächsten Synchrontakt weitergeführt. Damit erhält die erste Anwendung eine Aktualisierungsrate von f-halbe, z.B. 15 Hertz.

Für die erste Anwendung App_1 ist es notwendig, nach der Unterbrechung der Bearbeitung des Bildes die Daten, die zur Fertigstellung des Bildes in dem nächsten Synchrontakt benötigt werden - nachfolgend als Kontextdaten bezeichnet -, zwischen zu speichern, um sich zeitlich und örtlich von der zweiten Anwendung App_2 zu trennen und deren Abarbeitung nicht zu behindern.

Prinzipiell ist es möglich, die Bearbeitung in jedem Status des Umsetzungsprozesses zu unterbrechen, z.B. während eine Rotlinie auf der Anzeigeeinrichtung gezeichnet wird. Als Kontextdaten nach der Unterbrechung werden alle notwendigen Daten gespeichert, die zur Weiterbearbeitung benötigt werden. Für das Beispiel der roten Linie würden das Daten über die aktuelle Farbe und die Position umfassen, wo das Rendern beendet wurde.

Während die Grafikverarbeitungsvorrichtung 1 sich um die Umsetzung der Bilder der Anwendungen kümmert, bearbeitet die mindestens eine Grafikpipeline in der Grafikverarbeitungsvorrichtung 1 Grafikobjekte, welche Bestandteile des Bildes der Anwendung sind. Somit wird in der Grafikpipeline bei der Unterbrechung der Bearbeitung eines Bildes der ersten Anwendung in der Grafikpipeline die Bearbeitung von Grafikobjekten, z.B. Grafikprimitiven, in einem Synchrontakt unterbrochen und in einem anderen weitergeführt.

Zur Steuerung der Grafikverarbeitungsvorrichtung 1 bzw. der Grafikpipeline weist diese eine Zeitplanungseinrichtung 13 auf, welche zum einen gemäß Pfeil 12 einen Speicherbefehl context_store ausgibt, sobald die Bearbeitung des Bildes der ersten Anwendung App_1 unterbrochen werden soll, sowie ein Wiederherstellungssignal context_load, sobald die Bearbeitung des Bildes in dem nächsten Synchrontakt weitergeführt werden soll.

Weitere Aufgaben der Zeitplanungseinrichtung 13 sind das Speichern und Abrufen der genannten Kontextdaten sowie die Ausgabe von Kontrolldaten zur Kontrolle des Speicherbereichs in dem Pixelspeicher 8, wobei sichergestellt wird, dass die beiden Anwendungen App_1 und App_2 auf unterschiedliche, nicht überlappende Speicherbereich in dem Pixelspeicher 8 zugreifen und somit in diesem Bereich örtlich voneinander getrennt sind. Die Kontrolldaten bilden einen Teil der Daten in dem Rastermodul 7 und werden durch ein spezifisches grafisches Kommando gesetzt werden, das von den Anwendungen App_1 und App_2 nicht genutzt werden kann. Auf diese Weise sind die Daten in dem Pixelspeicher 8 räumlich sicher getrennt, so dass sich eine spatial segregation ergibt.

Nach dem Speicherbefehl context_store werden die Module, insbesondere das Geometriemodul 5 und das Rastermodul 7 bzw. deren Untermodule, angewiesen, eine vorliegende Kalkulation von Grafikobjekten zu einem Zwischenabschluss zu bringen, der so gewählt wird, dass an diesen Zwischenabschluss in dem nächsten Synchrontakt zur Weiterführung der Grafikgenerierung angeknüpft werden kann. Nachfolgend werden die Kontextdaten gemäß der gestrichelten Pfeile in der Figur 1 ausgelesen.

Die Kontextdaten, beginnend mit Fifo-Daten aus der Speichereinrichtung 4, Registerdaten aus dem Geometriemodul 5, Fifo-Daten aus der Speichereinrichtung 6 und Registerdaten aus dem Rastermodul 7 werden seriell weitergeschoben und über einen zusätzlichen Datenpfad an die Zeitplanungseinrichtung 13 übergeben. Damit wird eine Ringstruktur zwischen der Grafikpipeline und der Zeitplanungseinrichtung 13 erzeugt. Die Zeitplanungseinrichtung 13 legt die Kontextdaten über die Datenschnittstelle 9 in einem Speicher ab.

Nachdem die Kontextdaten ausgelesen sind, ist die Speicherverarbeitungsvorrichtung 1 bzw. die Grafikpipeline bereit, in einem nächsten Synchrontakt ein Bild der zweiten Anwendung App_2 zu bearbeiten.

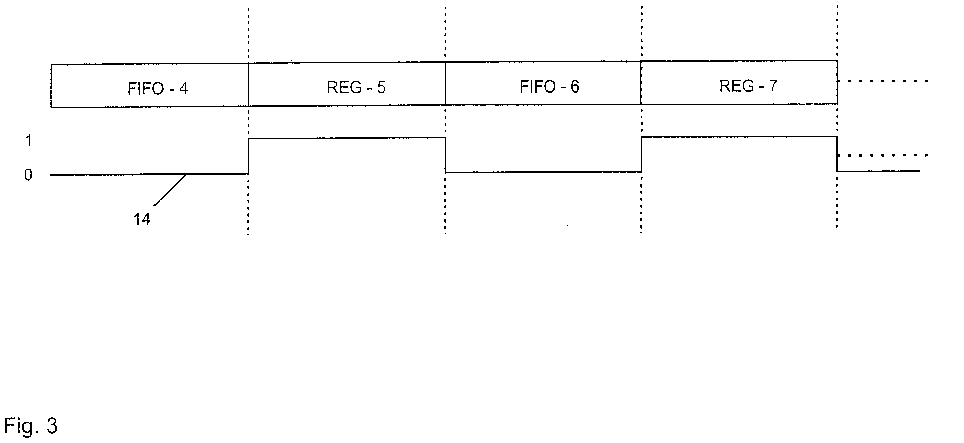

Die Struktur der auszulesenden Daten ist schematisch in der Figur 3 dargestellt. In der Figur 3 ist zu erkennen, dass in einem Datenstream zunächst Fifo-Daten FIFO-4 der Speichereinrichtung 4, nachfolgend Registerdaten REG-5 des Geometriemoduls 5, nachfolgend Fifo-Daten FIFO-6 der Speichereinrichtung 6 und nachfolgend Registerdaten REG-7 des Rastermoduls 7 angeordnet sind. Die Daten in dem Datenstream entsprechen den Daten aus den Modulen 5, 7 bzw. aus den Speichereinrichtungen 4, 6 vor dem Auslesen oder Weiterschieben der Daten nach dem Speicherbefehl context-store. Falls die Grafikpipeline mehr Untermodule und mehr zwischen den Untermodulen angeordnete Speichereinrichtungen aufweisen sollte, ist der Datenstream entsprechend zu verlängern. Die Kontextdaten werden durch einen Signalflag 14 erweitert, welcher in normalem Betriebsmodus stets auf 0 gesetzt ist, so dass die Module daraus ablesen können, dass die entsprechenden Registerdaten bearbeitet werden sollen. Liegt jedoch der Speicherbefehl context_store an, so setzt jedes der Module den Signalflag seiner Registerdaten auf 1 und zeigt damit, dass die nachfolgenden Module die Registerdaten nicht bearbeiten sondern über einen Bypass in Richtung der Zeitplanungseinrichtung 13 weiterschieben sollen. Die Daten der Speichereinrichtungen 4, 6 behalten den Signalflag stets auf "0", wobei der Signalflag von den nachfolgenden Modulen als "don't care" interpretiert wird, so dass auch diese Daten über einen Bypass weitergeschoben werden.

Für den Fall, dass in den Speichereinrichtungen 4, 6 oder in den Modulen 5, 7 keine Daten vorhanden sind, wird ein Dummy-Wort eingeschrieben, um die Struktur des Datenstreams zu erhalten.

Bei der Weiterführung der Bearbeitung in dem nächsten Synchrontakt legt die Zeitplanungseinrichtung 13 das Wiederherstellungssignal context_load an, liest die Kontextdaten des teilbearbeiteten Bildes über die Datenschnittstelle 9 aus und schiebt diese Kontextdaten wieder in die Grafikpipeline. Die Zuordnung der Daten in den Kontextdaten kann über die Reihenfolge und den alternierenden Signalflag 14 erschlossen werden. So ist der Speichereinrichtung 4 bekannt, dass sie den letzten Datenblock für Fifo-Daten übernehmen muss. Das Geometriemodul 5 zählt die Anzahl der Signalflags mit und entnimmt den Datenblock, bei dem die Anzahl des Signalflags 14 gleich 2 ist. Die Speichereinrichtung 6 zählt ebenfalls die Signalflags 14 und weiß, dass sie die Fifo-Daten nach dem ersten Signalflag 14 entnehmen muss. Das Rastermodul 7 übernimmt dagegen Daten aus dem ersten Signalflag 14. Diese Vorgehensweise ist auf eine beliebige Anzahl von Untermodulen zu erweitern, wobei jedes Untermodul die Registerdaten aus dem Datenstream entnimmt, die es anhand der Anzahl der Übergänge des Signalflags 14 verglichen mit seiner eigenen Position innerhalb der Grafikpipeline als eigene Daten erkennt.

Nachdem das teilbearbeitete Bild fertig bearbeitet wurde, können nachfolgend über die Kontrolleinrichtung 2 neue Grafikdaten in die Grafikpipeline eingelesen werden, wobei der Signalflag auf 0 gesetzt ist.

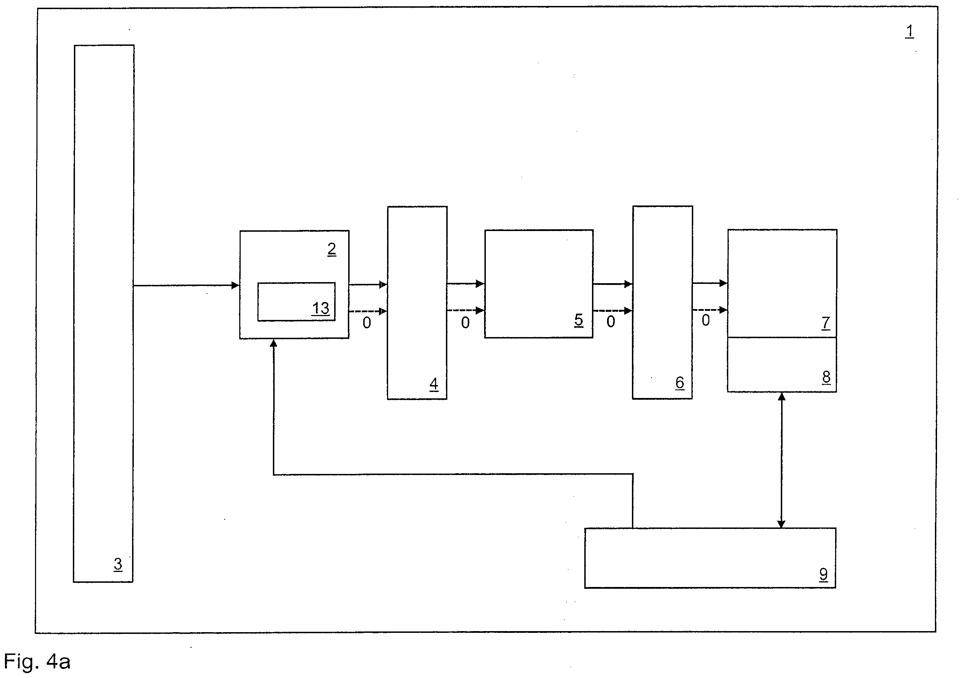

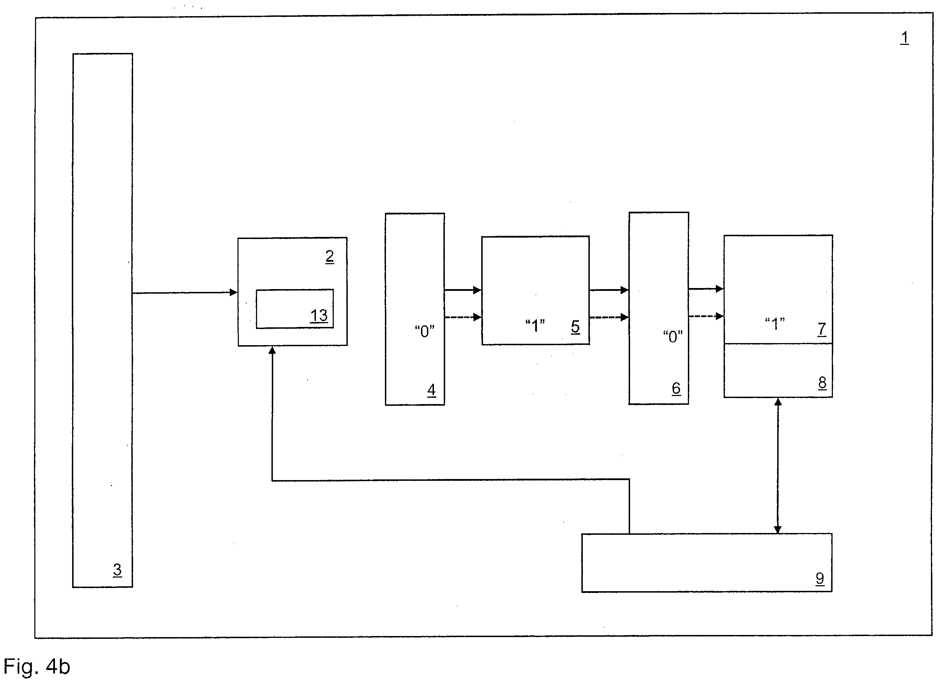

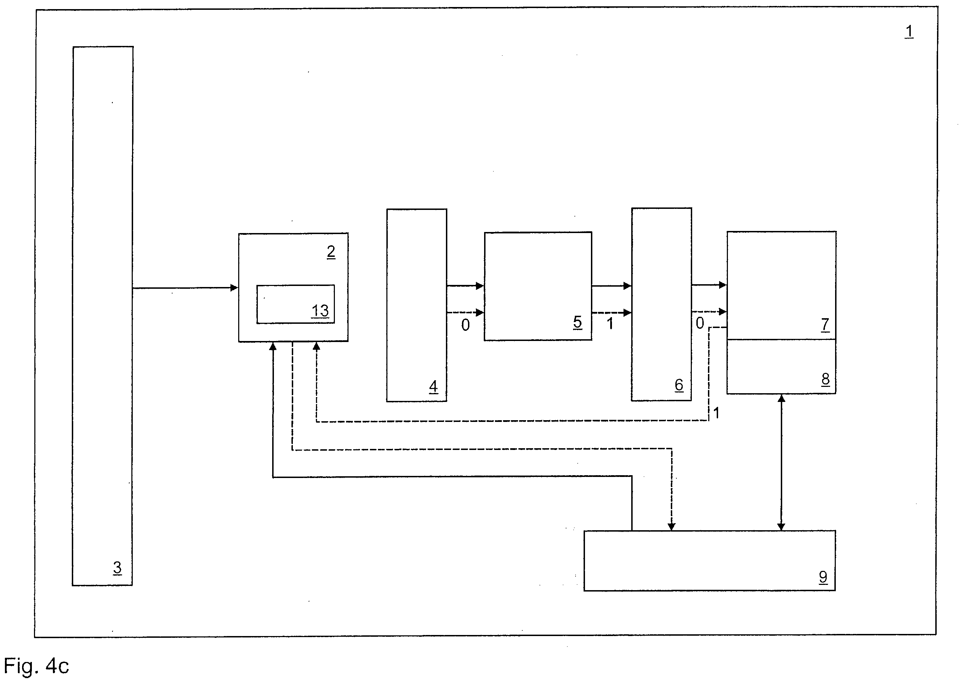

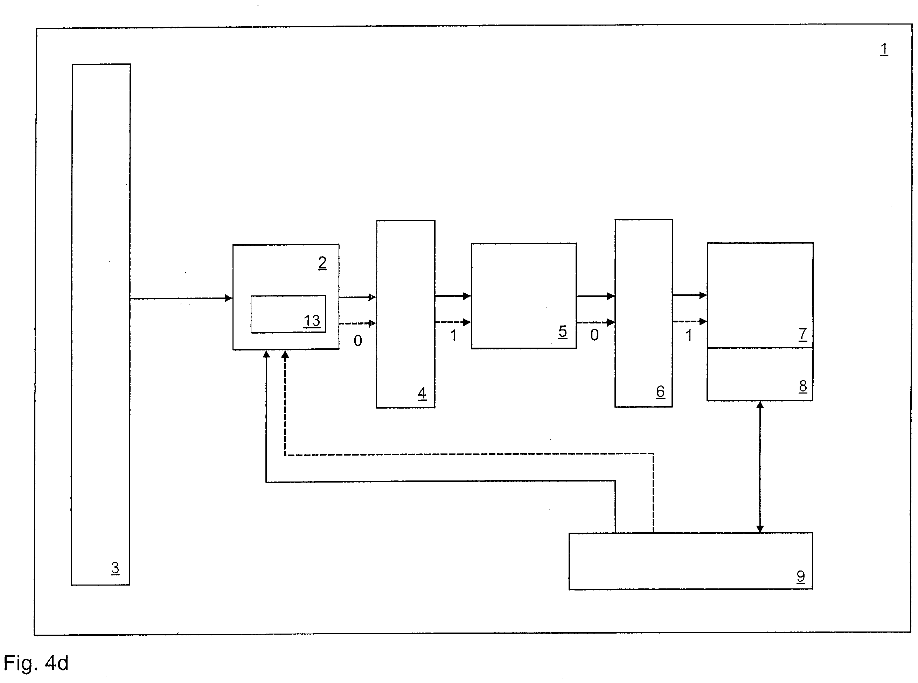

In den Figuren 4a, b, c und d sind die Einzelschritte nochmals dargestellt. In der Figur 4a befindet sich die Grafikpipeline im normalen Betriebszustand, wobei Grafikdaten von der Kontrolleinrichtung 2 über die Speichereinrichtung 4 in das Geometriemodul 5, nachfolgend in die Speichereinrichtung 6 und das Rastermodul 7 durch geleitet und bearbeitet werden.

Sobald das Speichersignal context_store anliegt, werden keine weiteren Grafikdaten von der Kontrolleinrichtung 2 in die Grafikpipeline eingespeist. Das Geometriemodul 5 und das Rastermodul 7 beenden ihre aktuellen Kalkulationen und setzen den Signalflag 14 ihrer aktuellen Registerdaten auf den Wert 1, wie das in der Figur 4b dargestellt ist. Die Daten in den Speichereinrichtungen 4, 6 behalten als Fifo-Daten den Signalflag auf "0".

Gemäß der Figur 4c werden die Kontextdaten ausgelesen und an die Zeitplanungseinrichtung 13 übergeben, wobei das Rastermodul 7 Daten aus den Speichereinrichtungen 6 mit einem auf "0" als "don't care" gesetzten Signalflag 14 sowie Daten aus dem Geometriemodul 5 mit einem auf "1" gesetzten Signalflag über einen Bypass unbearbeitet durchreicht, so dass der Datenstream mit den Kontextdaten mit der Struktur gemäß der Figur 3 zu der Zeitplanungseinrichtung 13 fließt. Diese Kontextdaten werden wie beschrieben über die Datenschnittstelle 9 gespeichert.

In der Figur 4d ist das Verhalten der Datenverarbeitungsvorrichtung 1 bei Anlegen des Wiederherstellungssignals context_load dargestellt, wobei von der Zeitplanungseinrichtung 13 die Kontextdaten über die Datenschnittstelle 9 ausgelesen werden und in die Grafikpipeline eingeleitet werden. Dabei zählt jede Speichereinrichtung 4, 6 und jedes Modul 5, 7 die Anzahl der Signalflags 14 ab, um die eigenen Daten zu erkennen. Sobald die Daten verteilt sind, wird die Weiterbearbeitung des teilbearbeiteten Grafikobjekts aufgenommen.

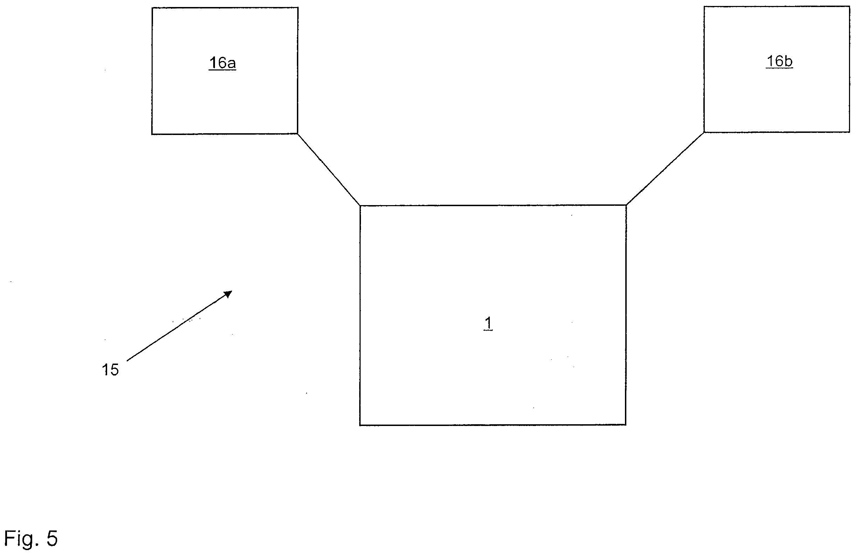

Die Figur 5 zeigt schließlich eine Anzeigeeinrichtung 15 mit einer ersten Anzeige 16a und einer zweiten Anzeige 16b, welche über die Grafikverarbeitungsvorrichtung 1, wie sie zuvor beschrieben wurde, angesteuert werden. Auf der Anzeige 16 a wird beispielsweise ein Primär-Flugdisplay (PFD) und auf der Anzeige 16b ein Navigationsdisplay (ND) angezeigt, welche durch zwei unterschiedliche Anwendungen, wie z.B. App_1 und App_2 in der Grafikverarbeitungsvorrichtung erzeugt werden.

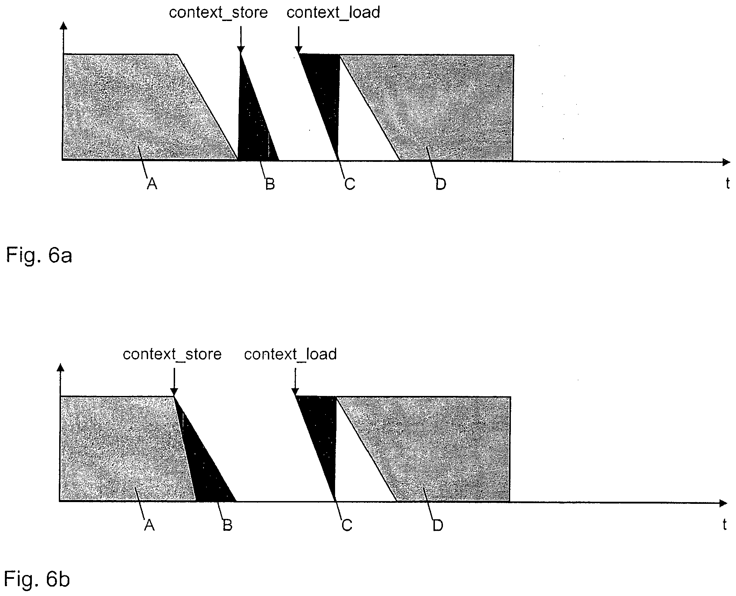

In den Figuren 6a,b ist die zeitliche Abfolge einer Unterbrechung und der Wiederaufnahme der Bearbeitung eines Grafikobjekts in der Grafikpipeline auf einer Zeitachse t veranschaulicht:
In dem Abschnitt A wird die Bearbeitung des Grafikobjekts regulär durchgeführt. Bei Anliegen des context_store Befehls werden die aktuellen Berechnungen in dem Abschnitt A beendet und damit die Bearbeitung des aktuellen Grafikobjekts unterbrochen. Nach der Beendigung werden in dem Abschnitt B die Kontextdaten ausgelesen. In einer nächsten Zeitscheibe werden die Kontextdaten in dem Abschnitt V wieder eingelesen und in dem Abschnitt D weiterbearbeitet.

Die Figur 6a zeigt eine reguläre Unterbrechung der Bearbeitung des Grafikobjekts, die in jeder betroffenen Zeitscheibe zu dem gleichen Zeitpunkt erfolgt. In der Figur 6b ist dagegen die Situation bei einem time-out in einer Zeitscheibe dargestellt, wobei in Abgrenzung zu der Figur 6a das Auslesen der Kontextdaten sofort nach Anliegen des context_store Befehls erfolgt.

### Bezugszeichenliste

- 1: Grafikverarbeitungsvorrichtung
- 2: Kontrolleinrichtung
- 3: Schnittstelle
- 4: Speichereinrichtung
- 5: Geometriemodul
- 6: Speichereinrichtung
- 7: Rastermodul
- 8: Pixelspeicher
- 9: Datenschnittstelle
- 10: unterer Pfeil
- 11: Pfeile Taktabschnitt
- 12: Pfeil Speicherbefehl
- 13: Zeitplanungseinrichtung
- 14: Signalflag
- 15: Anzeigeeinrichtung
- 16a: erste Anzeige
- 16b: zweite Anzeige

## Patentansprüche

1. Grafikverarbeitungsvorrichtung (1) umfassend
eine Kontrolleinrichtung (2) zur Übernahme von Grafikdaten zu ersten Graphikobjekten aus einer ersten Anwendung (App_1) und zur Übernahme von Grafikdaten zu zweiten Graphikobjekten aus einer zweiten Anwendung (App_2);
ein Geometriemodul (5) zur Erzeugung der Geometriedaten der Graphikobjekte aus den Grafikdaten; ein Rastermodul (7) zur Rasterung der Graphikobjekte auf Basis der Geometriedaten und zur Erzeugung von Pixeln der Graphikobjekte;
wobei die Kontrolleinrichtung (2), das Geometriemodul (5) und das Rastermodul (7) eine Grafikpipeline bilden, welche ausgebildet ist, in einem seriellen Durchgang eines der Graphikobjekte abzuarbeiten, indem aus den Grafikdaten zu dem Graphikobjekt Pixel des Grafikobjekts erzeugt werden,
wobei
die Grafikpipeline ausgebildet ist, die Bearbeitung eines der ersten Graphikobjekte der ersten Anwendung (App_1) in einem ersten seriellen Durchlauf zu unterbrechen, so dass ein teilbearbeitetes Graphikobjekt vorliegt, mindestens eines der zweiten Graphikobjekte der zweiten Anwendung (App_2) in einem zweiten seriellen Durchlauf zu bearbeiten und nachfolgend die Bearbeitung des teilbearbeiteten Graphikobjekts der ersten Anwendung (App_1) weiterzuführen, **dadurch gekennzeichnet,**
**dass** die Unterbrechung für jedes Grafikobjekt der ersten Anwendung erfolgt und dass die Grafikpipeline eine Serie von aufeinanderfolgenden jeweils gleichlangen Zeitscheiben vorgibt, wobei innerhalb einer gemeinsamen Zeitscheibe die Teilbearbeitung eines der ersten Graphikobjekte und die Bearbeitung eines der zweiten Graphikobjekte erfolgt,
wobei eine Zeitplanungseinrichtung (13) ausgebildet ist, ein Speichersignal (context_store) zur Unterbrechung der Bearbeitung des ersten Graphikobjekts an die Graphikpipeline auszugeben und die Grafikpipeline ausgebildet ist, als Reaktion auf das Speichersignal (context_store) Kontextdaten von dem teilbearbeiteten Grafikobjekt auszugeben, welche optional zwischengespeichert und für den späteren seriellen Durchlauf durch die Graphikpipeline zur Verfügung gestellt werden, um die Bearbeitung des teilbearbeiteten Grafikobjekts weiterzuführen,
wobei die Kontextdaten Registerdaten (REG-5, REG-7) der Module (5,7) und Fifo-Daten (FIFO-4, FIFO-6) von Speichereinrichtungen (4,6) zwischen und/oder vor den Modulen (5,7) umfassen, wobei die Registerdaten (REG-5, REG-7) einen Signalflag (14) aufweisen, der bei einem normalen Betrieb auf einen ersten Wert (0) und bei einem Speichervorgang auf einen anderen Wert (1) gesetzt ist
wobei die Registerdaten (REG-5, REG-7) und die Fifo-Daten (FIFO-4, FIFO-6) in den Kontextdaten abwechselnd angeordnet sind, wobei durch die Position der Registerdaten (REG-5, REG-7) und der Fifo-Daten (FIFO-4, FIFO-6) in den Kontextdaten die Zuordnung der Daten zu den Modulen (5,7) und zu den Speichereinrichtungen (4,6) festgelegt ist.

2. Grafikverarbeitungsvorrichtung (1) nach Anspruch 1, **dadurch gekennzeichnet, dass** die aufeinanderfolgenden Zeitscheiben einen Synchrontakt (11) für die Bearbeitung der Graphikobjekte vorgeben.

3. Grafikverarbeitungsvorrichtung (1) nach einem der vorhergehenden Ansprüche, **dadurch gekennzeichnet, dass** die Kontextdaten an dem Ende der Grafikpipeline, insbesondere von dem Rastermodul (7), an die Zeitplanungseinrichtung (13) ausgegeben werden.

4. Grafikverarbeitungsvorrichtung (1) nach Anspruch 3, **dadurch gekennzeichnet, dass** die Zeitplanungseinrichtung ausgebildet ist, die Kontextdaten in einem Speicher (9) abzulegen.

5. Grafikverarbeitungsvorrichtung (1) nach einem der vorhergehenden Ansprüche, **dadurch gekennzeichnet, dass** die Zeitplanungseinrichtung (13) ausgebildet ist, ein Wiederherstellungssignal (context_load) zur Weiterführung der Bearbeitung des teilbearbeiteten Graphikobjekts an die Graphikpipeline auszugeben und die Grafikpipeline ausgebildet ist, als Reaktion auf das Wiederherstellungssignal die Kontextdaten von dem teilbearbeiteten Grafikobjekt einzulesen, um die Bearbeitung weiterzuführen.

6. Grafikverarbeitungsvorrichtung (1) nach einem der vorhergehenden Ansprüche, **dadurch gekennzeichnet, dass** die Zeitplanungseinrichtung (13) mit der Graphikpipeline eine Ringstruktur bildet, so dass bei einem Speichersignal (context_store) die Kontextdaten an dem Ende der Grafikpipeline ausgelesen und dass bei einem Wiederherstellungsbefehl (context_load) die Kontextdaten in die Graphikpipeline eingespielt werden.

7. Grafikverarbeitungsvorrichtung (1) nach einem der vorhergehenden Ansprüche, **gekennzeichnet durch** einen Pixelspeicher (8), wobei die Zeitplanungseinrichtung (13) ausgebildet ist, den Pixeln der Grafikobjekte der ersten und der zweiten Anwendung (App_1, App_2) unterschiedliche Speicherbereiche zuzuweisen, so dass die Speicherbereiche der ersten und der zweiten Anwendung (App_1, App_2) in dem Pixelspeicher (8) voneinander getrennt sind.

8. Anzeigevorrichtung (15) für ein Flugzeugcockpit mit einer Grafikverarbeitungsvorrichtung (1) nach einem der vorhergehenden Ansprüche, mit mindestens einem ersten und einem zweiten Anzeigebereich (16a,b), wobei auf dem ersten Anzeigebereich (16a) Graphikobjekte der ersten Anwendung (App_1) und auf dem zweiten Anzeigebereich (16b) Graphikobjekte der zweiten Anwendung (App_2) darstellbar sind.

9. Anzeigevorrichtung (15) nach Anspruch 8, **dadurch gekennzeichnet, dass** die erste Anwendung (App_1) und die zweite Anwendung (App_2) unterschiedliche Aktualisierungsraten aufweisen.

10. Verfahren zur Darstellung von Grafikobjekten von mindestens einer ersten und einer zweiten Anwendung (App_1, App_2), wobei in der Grafikverarbeitungsvorrichtung (1) nach einem der Ansprüche 1 bis 7 oder in der Anzeigevorrichtung (15) nach einem der Ansprüche 8 oder 9 die Bearbeitung eines der ersten Graphikobjekte der ersten Anwendung (App_1) in einem ersten seriellen Durchlauf unterbrochen wird, so dass ein teilbearbeitetes Graphikobjekt vorliegt, mindestens eines der zweiten Graphikobjekte der zweiten Anwendung (App_2) in einem zweiten seriellen Durchlauf bearbeitet wird und nachfolgend die Bearbeitung des teilbearbeiteten Graphikobjekts der ersten Anwendung weitergeführt wird.

## Claims

1. Graphics processing apparatus (1) comprising
a control device (2) for accepting graphical data relating to first graphic objects from a first application (App_1) and for accepting graphical data relating to second graphic objects from a second application (App_2);
a geometry module (5) for generating the geometry data of the graphic objects from the graphical data; a raster module (7) for rasterizing the graphic objects on the basis of the geometry data and for generating pixels of the graphic objects;
the control device (2), the geometry module (5) and the raster module (7) forming a graphics pipeline which is designed to process one of the graphic objects in a serial pass through by generating pixels of the graphic object from the graphical data relating to the graphic object,
the graphics pipeline being designed to interrupt the processing of one of the first graphic objects of the first application (App_1) in a first serial pass through so that a partially processed graphic object is present, to process at least one of the second graphic objects of the second application (App_2) in a second serial pass through, and subsequently to continue the processing of the partially processed graphic object of the first application (App_1), **characterized**
**in that** the interruption is performed for each graphic object of the first application and in that the graphics pipeline prescribes a series of successive time slots which are each of equal length, the partial processing of one of the first graphic objects and the processing of one of the second graphic objects being performed within a common time slot,
a time planner (13) being designed to output a memory signal (context_store) for interrupting the processing of the first graphic object to the graphics pipeline, and the graphics pipeline being designed to react to the memory signal (context_store) by outputting context data of the partially processed graphic object which is optionally buffered and made available for the later serial pass through the graphics pipeline in order to continue the processing of the partially processed graphic object,
the context data comprising register data (REG-5, REG-7) of the modules (5, 7) and fifo data (FIFO-4, FIFO-6) from memory devices (4, 6) between and/or upstream of the modules (5, 7), the register data (REG-5, REG-7) having a signal flag (14) which is set to a first value (0) in normal operation and to another value (1) in memory operation,
the register data (REG-5, REG-7) and the fifo data (FIFO-4, FIFO-6) being alternately arranged in the context data, the assignment of the data to the modules (5, 7) and to the memory devices (4, 6) being fixed by the position of the register data (REG-5, REG-7) and of the fifo data (FIFO-4, FIFO-6) in the context data.

2. Graphics processing apparatus (1) according to Claim 1, **characterized in that** the successive time slots prescribe a synchronization clock (11) for the processing of the graphic objects.

3. Graphics processing apparatus (1) according to one of the preceding claims, **characterized in that** the context data is output to the time planner (13) at the end of the graphics pipeline, in particular by the raster module (7).

4. Graphics processing apparatus (1) according to Claim 3, **characterized in that** the time planner is designed to store the context data in a memory (9).

5. Graphics processing apparatus (1) according to one of the preceding claims, **characterized in that** the time planner (13) is designed to output a restore signal (context_load) for passing on the processing of the partially processed graphic object to the graphics pipeline, and the graphics pipeline is designed to react to the restore signal by reading in the context data of the partially processed graphic object in order to continue the processing.

6. Graphics processing apparatus (1) according to one of the preceding claims, **characterized in that** the time planner (13) forms with the graphics pipeline a ring structure such that upon the occurrence of a memory signal (context_store) the context data are read out at the end of the graphics pipeline, and such that upon the occurrence of a restore command (context_load) the context data are loaded into the graphics pipeline.

7. Graphics processing apparatus (1) according to one of the preceding claims, **characterized by** a pixel memory (8), the time planner (13) being designed to allocate different memory areas to the pixels of the graphic objects of the first and of the second application (App_1, App_2) so that the memory areas of the first and of the second application (App_1, App_2) are separated from one another in the pixel memory (8).

8. Display apparatus (15) for an aircraft cockpit, having a graphics processing apparatus (1) according to one of the preceding claims, having at least a first and a second display area (16a,b), it being possible to display graphic objects of the first application (App_1) on the first display area (16a), and to display graphic objects of the second application (App_2) on the second display area (16b).

9. Display apparatus (15) according to Claim 8, **characterized in that** the first application (App_1) and the second application (App_2) have different update rates.

10. Method for displaying graphic objects of at least a first and a second application (App_1, App_2), in which in the graphics processing apparatus (1) according to one of Claims 1 to 7, or in the display apparatus (15) according to either of Claims 8 and 9, the processing of one of the first graphic objects of the first application (App_1) is interrupted in a first serial pass through, so that a partially processed graphic object is present, at least one of the second graphic objects of the second application (App_2) is processed in a second serial pass through, and subsequently the processing of the partially processed graphic object of the first application is continued.

## Revendications

1. Arrangement de traitement graphique (1), comprenant
un dispositif de contrôle (2) destiné à prendre en charge des données graphiques relatives à des premiers objets graphiques provenant d'une première application (App_1) et destiné à prendre en charge des données graphiques relatives à des deuxièmes objets graphiques provenant d'une deuxième application (App_2) ;
un module géométrique (5) destiné à générer les données géométriques des objets graphiques à partir des données graphiques ; un module de tramage (7) destiné à tramer les objets graphiques sur la base des données géométriques et destiné à générer des pixels des objets graphiques ;
le dispositif de contrôle (2), le module géométrique (5) et le module de tramage (7) formant un pipeline graphique qui est conçu pour traiter l'un des objets graphiques dans un passage en série en générant les pixels de l'objet graphique à partir des données graphiques relatives à l'objet graphique,
le pipeline graphique étant conçu pour interrompre le traitement de l'un des premiers objets graphiques de la première application (App_1) dans un premier passage en série de sorte qu'il existe un objet graphique partiellement traité, traiter au moins l'un des deuxièmes objets graphiques de la deuxième application (App_2) dans un deuxième passage en série et ensuite poursuivre le traitement de l'objet graphique partiellement traité de la première application (App_1), **caractérisé en ce**
**que** l'interruption a lieu pour chaque objet graphique de la première application et **en ce que** le pipeline graphique prédéfinit une série de tranches temporelles successives respectivement de même longueur, le traitement partiel de l'un des premiers objets graphiques et le traitement de l'un des deuxièmes objets graphiques s'effectuant au sein d'une tranche temporelle commune,
un dispositif de planification temporelle (13) étant configuré pour délivrer au pipeline graphique un signal de mémorisation (context_store) en vue d'interrompre le traitement du premier objet graphique et le pipeline graphique étant configuré pour, en réaction au signal de mémorisation (context_store), délivrer des données contextuelles de l'objet graphique partiellement traité, lesquelles sont facultativement mémorisées temporairement et mises à disposition pour le passage en série ultérieur à travers le pipeline graphique afin de poursuivre le traitement de l'objet graphique partiellement traité,
les données contextuelles comprenant des données de registre (REG-5, REG-7) des modules (5, 7) et des données Fifo (FIFO-4, FIFO-6) de dispositifs de mémorisation (4, 6) entre et/ou avant les modules (5, 7), les données de registre (REG-5, REG-7) possédant un fanion de signal (14) qui, lors d'un fonctionnement normal, est mis à une première valeur (0) et, lors d'une opération de mémorisation, à une autre valeur (1)
les données de registre (REG-5, REG-7) et les données Fifo (FIFO-4, FIFO-6) étant disposées en alternance dans les données contextuelles, l'affectation des données aux modules (5, 7) et aux dispositifs de mémorisation (4, 6) étant fixée par la position des données de registre (REG-5, REG-7) et des données Fifo (FIFO-4, FIFO-6) dans les données contextuelles.

2. Arrangement de traitement graphique (1) selon la revendication 1, **caractérisé en ce que** les tranches temporelles successives prédéfinissent une horloge de synchronisation (11) pour le traitement des objets graphiques.

3. Arrangement de traitement graphique (1) selon l'une des revendications précédentes, **caractérisé en ce que** les données contextuelles sont délivrées à la fin du pipeline graphique, notamment par le module de tramage (7), au dispositif de planification temporelle (13).

4. Arrangement de traitement graphique (1) selon la revendication 3, **caractérisé en ce que** le dispositif de planification temporelle est configuré pour stocker les données contextuelles dans une mémoire (9).

5. Arrangement de traitement graphique (1) selon l'une des revendications précédentes, **caractérisé en ce que** le dispositif de planification temporelle (13) est configuré pour délivrer au pipeline graphique un signal de rétablissement (context_load) en vue de poursuivre le traitement de l'objet graphique partiellement traité et le pipeline graphique est configuré pour, en réaction au signal de rétablissement, charger les données contextuelles de l'objet graphique partiellement traité afin de poursuivre le traitement.

6. Arrangement de traitement graphique (1) selon l'une des revendications précédentes, **caractérisé en ce que** le dispositif de planification temporelle (13) forme avec le pipeline graphique une structure en anneau, de sorte qu'en présence d'un signal de mémorisation (context_store), les données contextuelles sont lues à la fin du pipeline graphique et qu'en présence d'un ordre de rétablissement (context _load), les données contextuelles sont introduites dans le pipeline graphique.

7. Arrangement de traitement graphique (1) selon l'une des revendications précédentes, **caractérisé par** une mémoire de pixels (8), le dispositif de planification temporelle (13) étant configuré pour attribuer des zones de mémoire différentes aux pixels des objets graphiques de la première et de la deuxième application (App_1, App_2), de sorte que les zones de mémoire de la première et de la deuxième application (App_1, App_2) sont séparées l'une de l'autre dans la mémoire de pixels (8).

8. Arrangement d'affichage (15) pour un cockpit d'aéronef comprenant un arrangement de traitement graphique (1) selon l'une des revendications précédentes, comprenant au moins une première et une deuxième zone d'affichage (16a, b), les objets graphiques de la première application (App_1) pouvant être représentés sur la première zone d'affichage (16a) et les objets graphiques de la deuxième application (App_2) sur la deuxième zone d'affichage (16b).

9. Arrangement d'affichage (15) selon la revendication 8, **caractérisé en ce que** la première application (App_1) et la deuxième application (App_2) possèdent des fréquences de mise à jour différentes.

10. Procédé de représentation d'objets graphiques d'au moins une première et une deuxième application (App_1, App_2), selon lequel, dans l'arrangement de traitement graphique (1) selon l'une des revendications 1 à 7 ou dans l'arrangement d'affichage (15) selon l'une des revendications 8 ou 9, le traitement de l'un des premiers objets graphiques de la première application (App_1) dans un premier passage en série est interrompu de sorte qu'il existe un objet graphique partiellement traité, au moins l'un des deuxièmes objets graphiques de la deuxième application (App_2) est traité dans un deuxième passage en série et ensuite le traitement de l'objet graphique partiellement traité de la première application est poursuivi.
